# EUROPEAN PATENT APPLICATION

(11) **EP 2 093 891 A1**
(43) Date of publication of application: **26.08.2009**
(21) Application number: 08151807.8
(22) Date of filing: 22.02.2008
(51) Int. Cl.: H04B 1/40

(54) **Transceiver structure**

(71) Applicant: Sony Corporation, Tokyo 108-0075 (JP); Fraunhofer-Gesellschaft zur Foerderung der Angewandten Forschung E.V., 80007 München (DE)
(72) Inventor: Koch, Stefan, 70327, Stuttgart (DE); Kallfass, Ingmar, 79108, Freiburg i. Br. (DE)
(74) Representative: Körber, Martin Hans

(57) **Abstract**

The present invention relates to an integrated transceiver structure 1; 20, comprising at least one antenna terminal
2a-2d, a mixer 4 adapted to down-convert signals received via said at least one antenna terminal 2a-2d and to up-convert signals to be transmitted via said antenna terminal 2a-2d, a receiving path 5 adapted to guide signals received via said at least one antenna terminal 2a-2d to said mixer 4, a transmitting path 16 adapted to guide signals to be transmitted from said mixer 4 to said at least one antenna terminal 2a-2d, a first switch 7 adapted to selectively connect said at least one antenna terminal 2a-2d to said receiving path 5 or said transmitting path 16, and a second switch 8 adapted to selectively connect said receiving path 5 or said transmitting path 6 to said mixer 4.

The transceiver structure 1; 20 of the invention is advantageously implemented on a single chip and is preferably suitable for millimeter wave wireless applications.

## Description

The present invention relates to a transceiver structure.

In the prior art, transceiver structures for wireless systems with multiple antennas either require multiple transceivers or complex switching circuitry. The use of multiple transceivers dramatically increases the power consumption and the manufacturing costs. The use of different (e.g. integrated) circuitry structures for the various necessary switching circuits creates additional losses due to interfaces (e.g. bond interfaces) and thus reduces the system performance. Further, such solutions increase the size of the overall circuitry since multiple separate housings can be necessary.

The object of the present invention is therefore to provide a transceiver structure with reduced losses which can be manufactured at reasonable cost and has a reduced size.

The above object is achieved by a transceiver structure according to independent claim 1. The transceiver structure of the present invention comprises at least one antenna terminal, a mixer adapted to down-convert signals received via said at least one antenna terminal and to up-convert signals to be transmitted via said antenna terminal, a receiving path adapted to guide signals received via said at least one antenna terminal to said mixer, a transmitting path adapted to guide signals to be transmitted from said mixer to said at least one antenna terminal, a first switch adapted to selectively connect said at least one antenna terminal to said receiving path or said transmitting path, and a second switch adapted to selectively connect said receiving path or said transmitting path to said mixer.

The transceiver structure of the present invention is advantageously integrated into a single chip and manufactured using e.g. a monolithic integrated circuit technology or any other suitable technology. If all necessary elements are integrated on a single chip, losses due to interfaces (e.g. bond interfaces) are minimized and the transceiver structure has a small size and can be manufactured at low cost. Alternatively, the transceiver structure of the present invention can be implemented on an electric circuit board. The transceiver structure of the present invention is particularly suited for wireless millimetre wave applications, but can also be used in wireless microwave applications or even wired applications if necessary.

Another advantage of the transceiver structure of the present invention is the reduced power consumption due to the integration of the various elements in a single structure. Specific advantageous applications of the transceiver structure of the present invention are applications in short range wireless systems in which communication with high data rates is required.

Advantageously, the transceiver structure of the present invention comprises at least two antenna terminals, said first switch being adapted to selectively switch between said at least two antenna terminals on the one side and the receiving and the transmitting path on the other side. The transceiver structure of the present invention is particularly advantageous in the case of two or more antenna terminals.

For the advantageously, the transceiver structure of the present invention comprises a respective antenna connected to a respective one of said at least one antenna terminal. In this case, respective antennas are integrated with the transceiver structure of the present invention, e.g. on the same chip or the same circuit board. Although the size might become bigger due to the additional integration of the antennas, it might be advantageous in some applications. Further, it might be possible to additionally reduce the losses at the terminals connecting the first switch and the multiple antennas.

Further advantageously, the receiving path comprises an amplifier and said transmitting path comprises an amplifier. Hereby, the amplifier in the receiving path might for example be a controllable low noise amplifier. The amplifier in the transmitting path might for example be a controllable power amplifier.

Further advantageously, the transceiver structure of the present invention may additionally comprise additional transmitting paths and/or receiving paths. In some applications, it might be advantageous to provide several transmitting paths and/or several receiving paths, for example if a transceiver structure of the present invention is adapted to receive and transmit in several frequency ranges or the like.

Further advantageously, the transceiver structure of the present invention comprises a local oscillator providing an oscillator signal, said local oscillator being connected to said mixer. In other words, a local oscillator is additionally integrated on the same chip or circuit board with the transceiver structure of the present invention. Hereby, an oscillator buffer may be provided between the local oscillator and said mixer. Additionally, a divider buffer adapted to couple out a part of a signal provided from the local oscillator to the mixer may be provided in the transceiver structure of the present invention. In advantageous application, the local oscillator provides e.g. a 30 GHz signal and said mixer is a sub-harmonic mixer. This is advantageous in the case that the transceiver structure of the present invention operates e.g. in the 60 GHz frequency range, since the provision of a 30 GHz oscillator and a sub-harmonic mixer avoids the necessity of providing additional filter elements on the chip. The present invention will be further explained in more detail by means of advantageous embodiments relating to the enclosed drawings, in which
Figure 1 shows a schematic block diagram of a first embodiment of a transceiver structure according to the present invention, and
Figure 2 shows a schematic block diagram of a second embodiment of a transceiver structure of the present invention.

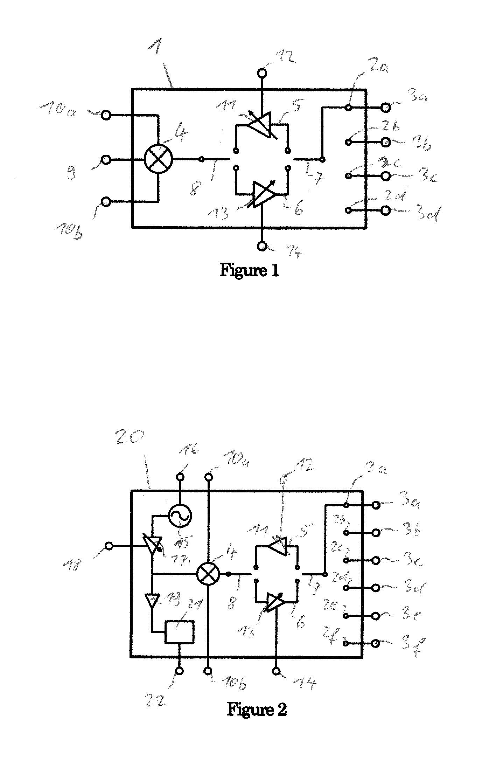

Figure 1 shows a schematic block diagram of a first embodiment of an integrated transceiver structure 1 of the present invention. The transceiver structure 1 comprises multiple antenna terminals 2a, 2b, 2c, 2d, namely in the present case are four antenna terminals, which can be connected to respective antennas or antenna structures via respectively allocated antenna connectors 3a, 3b, 3c, 3d. The transceiver structure 1 further comprises a mixer 4 which is adapted to down-convert signals received via the antenna terminals 2a to 2d and to up-covert signals to be transmitted via said antenna terminals 2a to 2d. Hereby, the mixer 4 is connected to two signal terminals 10a, 10b, whereby the signal terminal 10a for example adapted to carry an in-phase part of the signal and the signal terminal 10b is for example adapted to carry the quadrature part of the signal. Thus, the signal terminals 10a and 10b are signal input/output terminals of the transceiver structure 1. Depending on the application and specific implementations, the signal terminals 10a and 10b may carry intermediate frequency signals or base band frequency signals. Thus, the mixer 4 may be implemented to up-convert signals from the base band or an intermediate frequency band to the desired transmission frequency or to down-convert signals from the transmission frequency to an intermediate frequency or a base band frequency.

The transceiver structure 1 further comprises a receiving path 5 adapted to guide signals received via the antenna terminals 2a to 2d to said mixer 4 and a transmitting path 6 adapted to guide signals to be transmitted from said mixer 4 to said antenna terminals 2a to 2d. The receiving path 5 comprises an amplifier 11, for example a low noise amplifier, which is controlled by means of an automatic gain control voltage through a corresponding control voltage terminal 12. The transmitting path 6 comprises a power amplifier 13 which is controlled by an automatic gain control voltage via a corresponding control voltage terminal 14.

Between the transmitting path 6 and the receiving path 5 on the one side and the antenna terminals 2a to 2d on the other side, a first switch 7 is located, which is adapted to selectively connect one of the antenna terminals 2a to 2d to one of the receiving path 5 and the transmitting path 6. The first switch 7 is advantageously implemented as a low loss switch. In the case of the first embodiment shown in figure 1, the first switch 7 is a 2:4 throw switch. However, depending on the number of antenna terminals 2a to 2f, the first switch 7 could be implemented as any kind of 2:n throw switch, whereby n is an integer equal or lager than 1. It has to be noted that although the general transceiver structure of the present invention is advantageous for applications with multiple antenna terminals or antennas, it can also readily used for applications in which only a single antenna terminal or a single antenna is provided.

Between the mixer on the one hand and the receiving path 5 and the transmitting path 6 on the other hand, a second switch 8 is provided, which is adapted to selectedly connect the mixer 4 to said receiving path 5 or said transmitting path 6. The second switch 8 is advantageously implemented as a low loss switch. In case of the first embodiment, the second switch is a 1:2 throw switch. It has to be noted that implementations of the transceiver structure of the present invention are possible, in which several receiving paths and/or several transmitting paths could be provided. In such a case, the first switch 7 and the second switch 8 would be implemented with the necessary number of poles and throws.

Although the transceiver structure according to the first embodiment is shown with antenna terminals 2a to 2d which are adapted to be connected to external antennas via the antenna connectors 3a to 3d, it is possible to implement the multiple antennas with the transceiver structure 1. In this case, the first switch 7 would directly switch between the receiving path 5 and the receiving path 6 on the one side and the antennas on the other side. Further, in the transceiver structure 1 according to the first embodiment, the mixer 4 is connected to a local oscillator terminal 9 to which an external local oscillator can be connected to the mixer 4. However, such a local oscillator may be directly implemented with the transceiver structure 1.

Fig. 2 shows a schematic block diagram of a second embodiment of a transceiver structure 20 according to the present invention. Elements of the transceiver 20 shown in Fig. 2 which are identical to the corresponding elements of the transceiver structure I shown in Fig. 1 are identified by the same reference numerals. Thus, the transceiver structure 20 of the second embodiment shown in Fig. 2 comprises a receiving path 5 with an amplifier 11 and a transmitting path 6 with an amplifier 13 which are identical to the respective elements of the transceiver structure 1 of Fig. 1. Further, the transceiver structure 20 comprises a mixer 4 connected to two signal terminals 10a and 10b identical to the corresponding elements of the transceiver structure 1 of Fig. 1. Further, the second switch 8 of the transceiver structure 20 is identical to the second switch 8 of the transceiver structure 1 of Fig. 1. One difference is that the transceiver structure 20 comprises six antenna terminals 2a to 2f, which are respectively connected to an antenna connector 3a to 3f. Correspondingly, the first switch 7 is a 2:6 throw switch. Otherwise, the functionality of the switches is identical. In the second embodiment of the transceiver structure 20, instead of having antenna connectors 3a to 3f, it is also possible to implement the antennas directly with the transceiver 20, so that the first switch directly switches between the receiving path 5 and the transmitting path 6 on the one hand and the multiple antennas on the other hand.

The transceiver structure 20 of the second embodiment shown in Fig. 2 has a local oscillator 15 integrated with the transceiver structure 20. The local oscillator 15 is connected to a tuning voltage terminal 16, through which a tuning voltage for the local oscillator 15 is supplied. The local oscillator 15 is adapted to provide a local oscillator signal to the mixer 4. In the shown embodiment, the oscillator signal output from the local oscillator 15 is provided to an oscillator buffer 17 provided in the transceiver structure 20, the oscillator buffer 17 is provided between the local oscillator 15 and the mixer 4 and functions to isolate the local oscillator as much as possible against impedance changes and similar influences which might cause a change of the frequency of the signal output by the local oscillator 15. Further, the local oscillator buffer 17 is adapted to amplify the local oscillator signal output from the local oscillator 15 to a level on which the mixer 4 operates. Hereby, the oscillator buffer 17 is connected to a voltage terminal 18 through which an external automatic gain control voltage, which could be a fix voltage or a temperature compensated voltage or the like is supplied to the oscillator buffer 17 so that the oscillator buffer 17 runs on a stable and fix power level.

The transceiver structure 20 according to the second embodiment further comprises a divider buffer 19 which is connected to the line between the oscillator buffer and the mixer 4 and is adapted to couple out a part of the signal provided from the local oscillator buffer 17 to the mixer 4. The divider buffer 19 is hereby connected to a divider 21 and isolates the divider 21 from the oscillator buffer 17 and the mixer 4 as well as the rest of the circuitry. The divider buffer 19 only obtains a very small part of the power which goes from the oscillator buffer 17 to the mixer 4, but amplifies the power of the signal to a level at which the divider 21 operates. The output signal from the divider 21 is then provided to a divider output terminal 22. The output signal at the divider output terminal 22 then used by external circuitry, such as a phase locked loop which compares the signal of an external reference clock to the signal output by the divider 21 and generates a DC tuning voltage which can be supplied at the voltage terminal 16 to tune the oscillator 15. The oscillator buffer 17 and the divider buffer 19 therefore enable the generation of a very stable and clean local oscillator signal in the local oscillator 15.

The local oscillator may advantageously be implemented e.g. as a 30 GHz oscillator, whereby the mixer 4 is implemented as a sub-harmonic mixer, in case that the transceiver structure 20 is adapted to operate e.g. in the 60 GHz range. Hereby, the provision of additional filters to suppress any 60 GHz leakages is not necessary, in other words it is possible to implement the transceiver structure 20 in this case without any additional filter elements on the chip.

Generally, the interpreted transceiver structure 1, 20 of the present invention are by providing only a single mixer and by providing only two switches, namely the first and the second switch in the described and claimed way enables a large reduction of the power loss since the first and the second switch can be switched with lower power as compared to prior art arrangements. Further, the transceiver structure 1, 20 of the present invention can be implemented or integrated on a single chip, such as an Integrated Circuit (IC), thus can be manufactured with relatively low cost while still providing a high performance regarding power consumption, output powder, noise as well as size requirements. For example, the transceiver structure 1, 20, optionally with the additional elements as discussed above, can be formed as a monolithic integrated circuit transceiver structure on a single chip. Alternatively, the transceiver structure 1, 20. optionally with the additional elements as discussed above, may be implemented on a common electronic circuit board. It has to be understood, however, that additional circuitry elements which are not described above may be provided as a part of the transceiver structure of the present invention in same applications.

## Claims

1. Transceiver structure (1; 20), comprising at least one antenna terminal (2a-2f),
a mixer (4) adapted to down-convert signals received via said at least one antenna terminal (2a-2f) and to up-convert signals to be transmitted via said antenna terminal (2a-2t),
a receiving path (5) adapted to guide signals received via said at least one antenna terminal (2a-2f) to said mixer (4),
a transmitting path (16) adapted to guide signals to be transmitted from said mixer (4) to said at least one antenna terminal (2a-2f),
a first switch (7) adapted to selectively connect said at least one antenna terminal (2a-2f) to said receiving path (5) or said transmitting path (16), and
a second switch (8) adapted to selectively connect said receiving path (5) or said transmitting path (6) to said mixer(4).

2. Transceiver structure (1; 20) according to claim 1,
comprising at least two antenna terminals (2a-2f), said first switch (7) being adapted to selectively switch between said at least two antenna terminals (2a-2f) on the one side and the receiving path (5) and the transmitting path (7) on the other side.

3. Transceiver structure (1; 20) according to claim 1 or 2,
comprising a respective antenna (3a-3f) connected to a respective one of said at least one antenna terminal (2a-2f).

4. Transceiver structure (1; 20) according to claim 1, 2 or 3,
wherein said receiving path (5) comprises an amplifier (11) and said transmitting path (6) comprises an amplifier (12).

5. Transceiver structure (1; 20) according to one of the claims 1 to 4,
comprising at least further transmitting and/or receiving paths.

6. Transceiver structure (20) according to one of the claims 1 to 5,
comprising a local oscillator (15) providing an oscillator signal to said mixer (4).

7. Transceiver structure (20) according to claim 6,
wherein an oscillator buffer (17) is provided between said local oscillator (15) and said mixer (4).

8. Transceiver structure (20) according to claim 7,
comprising a divider buffer (19) adapted to couple out a part of the signal provided from the local oscillator (15) to said mixer (4).

9. Transceiver structure (20) according to one of the claims 6 to 8,
wherein said local oscillator (15) provides a local oscillator signal and said mixer (4) is a sub-harmonic mixer.

10. Transceiver structure (1; 20) according to one of the claims 1 to 9,
being formed as an integrated transceiver structure on a single chip.
